# EUROPÄISCHE PATENTSCHRIFT

(11) **EP 3 000 159 B1**
(45) Veröffentlichungstag und Bekanntmachung des Hinweises auf die Patenterteilung: **13.03.2019**
(21) Anmeldenummer: 14725727.3
(22) Anmeldetag: 23.05.2014
(51) Int. Cl.: H02H 3/33, H02H 3/05, H02H 3/04, H01H 83/14, H01H 83/02

(54) **FEHLERSTROMSCHUTZSCHALTER**
RESIDUAL CURRENT CIRCUIT BREAKER
INTERRUPTEUR DE PROTECTION CONTRE LES COURANTS DE COURT-CIRCUIT

(30) Priorität: 23.05.2013 DE 102013105310
(43) Veröffentlichungstag der Anmeldung: 30.03.2016
(73) Patentinhaber: Eaton Intelligent Power Limited, Dublin 4 (IE)
(72) Erfinder: RITZINGER, Georg, A-3424 Wolfpassing (AT)
(74) Vertreter: Eaton IP Group EMEA
(86) Internationale Anmeldenummer: PCT/EP2014/060671
(87) Internationale Veröffentlichungsnummer: WO 2014/187961

(56) Entgegenhaltungen:
- EP-A1- 1 478 069
- DE-A1- 19 735 412
- Anonymous: "Photo MOS Relay Product Description E D", , 28. September 2010 (2010-09-28), Seiten 1-4, XP055131598, Gefunden im Internet: URL:http://search.alkon.net/cgi-bin/pdf.pl ?pdfname=cosmo/mos-cd/descrip.pdf [gefunden am 2014-07-25]

## Beschreibung

Die Erfindung betrifft einen Fehlerstromschutzschalter gemäß dem Oberbegriff des Patentanspruches 1.

In zahlreichen Ländern ist gesetzlich vorgeschrieben, dass ein Fehlerstromschutzschalter die Fähigkeit aufweisen muss vollkommen netzspannungsunabhängig einen sinusförmigen Fehlerstrom zu detektieren und gegebenenfalls auszulösen. Allerdings weisen derartige Fehlerstromschutzschalter nur eine sehr eingeschränkte Funktionalität auf. Zusätzliche Anforderungen an einen Fehlerstromschutzschalter, wie etwa das sichere Detektieren glatter und/oder pulsierender Gleichfehlerströme, erfordern in der Regel zu deren Umsetzung eine netzspannungsabhängige Auslöseschaltung. Dabei ist allerdings sicherzustellen, dass bei einem Ausfall dieser netzspannungsabhängigen Auslöseschaltung weiterhin die geforderten Grundfunktionen weiterhin durch den betreffenden Fehlerstromschutzschalter erfüllt werden.

Es sind daher Fehlerstromschutzschalter bekannt, welche sowohl eine netzspannungsunabhängige Auslöseschaltung als auch eine netzspannungsabhängige Auslöseschaltung aufweisen. Es hat sich allerdings als problematisch herausgestellt bei derartigen Fehlerstromschutzschaltern sicherzustellen, dass die netzspannungsabhängige Auslöseschaltung auch tatsächlich nur bei einer ordnungsgemäßen Funktion derselben in Betrieb ist und ansonsten die netzspannungsunabhängige Auslöseschaltung Verwendung findet.

Die DE 197 35 412 A1 beschreibt eine Fehlerstromschutzeinrichtung mit zwei Auslöseschaltungen, wobei eine der Auslöseschaltungen für Wechsel-und Pulsfehlerströme ausgebildet ist, und die andere Auslöseschaltung für Gleichfehlerstrom.

Aus der EP 1 478 069 A1 beschreibt eine allstromsensitive Fehlerstromschutzeinrichtung mit einer netzspannungsunabhängigen Sensoreinrichtung für Wechselfehlerstrom und einer netzspannungsabhängigen Sensoreinrichtung für glatten Gleichfehlerstrom, Wechselfehlerstrom und pulsierenden Gleichfehlerstrom.

Aufgabe der Erfindung ist es daher einen Fehlerstromschutzschalter der eingangs genannten Art anzugeben, mit welchem die genannten Nachteile vermieden werden können, und bei welchem sichergestellt werden kann, dass bei einem Fehler in der netzspannungsabhängigen Auslöseschaltung auf die netzspannungsunabhängige Auslöseschaltung gewechselt wird.

Erfindungsgemäß wird dies durch die Merkmale des Patentanspruches 1 erreicht.

Dadurch kann sichergestellt werden, dass die netzspannungsabhängige Auslöseschaltung nur betrieben wird solange diese auch ordnungsgemäß bzw. wie vorgesehen funktioniert. Bereits bei einer Störung der Funktion der Auslöseelektronik steuert diese nicht mehr ordnungsgemäß die Steuerelektronik in der von dieser erwarteten Form an, woraufhin die Steuerelektronik die netzspannungsabhängige Auslöseelektronik abschaltet bzw. von der entsprechenden Wicklung des Summenstromwandlers elektrisch trennt, und gleichzeitig die netzspannungsunabhängige Auslöseelektronik aktiviert, indem diese mit der entsprechenden Wicklung des Summenstromwandlers schaltungstechnisch verbunden bzw. kontaktiert wird. Dadurch kann nicht nur sichergestellt werden, dass stets eine der beiden Auslöseelektroniken aktiv ist, sondern vielmehr, dass die netzspannungsabhängige Auslöseelektronik nur in Betrieb ist, wenn diese auch entsprechend deren Vorgaben funktioniert.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen eine lediglich bevorzugte Ausführungsform beispielhaft dargestellt ist, näher beschrieben. Dabei zeigt:
Fig. 1 ein Blockschaltbild der bevorzugten Ausführungsform eines Fehlerstromschutzschalters; und
Fig. 2 eine bevorzugte Ausführungsform einer Steuerelektronik eines Fehlerstromschutzschalters gemäß Fig. 1.

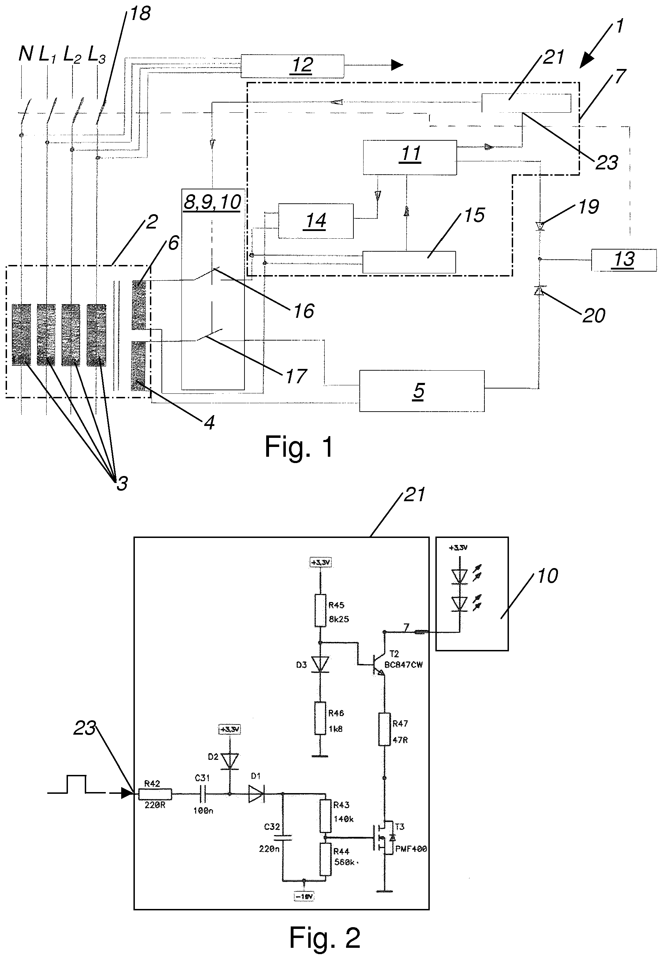

Fig. 1 zeigt ein Blockschaltbild eines Fehlerstromschutzschalters 1 mit einem Summenstromwandler 2, welcher Primärwicklungen 3 sowie eine Sekundärwicklung 4 und eine Tertiärwicklung 6 aufweist, wobei die Sekundärwicklung 4 mit einer netzspannungsunabhängigen Auslöseelektronik 5 schaltungstechnisch verbunden ist, wobei die Tertiärwicklung 6 mit einer netzspannungsabhängigen Auslöseelektronik 7 schaltungstechnisch verbunden ist, wobei der Fehlerstromschutzschalter 1 eine Steuerelektronik 21 aufweist, welche dazu ausgebildet ist, bei vorgebbarer Ansteuerung durch die netzspannungsabhängige Auslöseelektronik 7 einen Schalter 8 anzusteuern, und dass der Schalter 8 im angesteuerten Zustand den Kontakt der Sekundärwicklung 4 zur netzspannungsunabhängigen Auslöseelektronik 5 unterbricht und, insbesondere im Wesentlichen gleichzeitig, den Kontakt der Tertiärwicklung 6 zur netzspannungsabhängigen Auslöseelektronik 7 herstellt.

Dadurch kann sichergestellt werden, dass die netzspannungsabhängige Auslöseschaltung 7 nur betrieben wird solange diese auch ordnungsgemäß bzw. wie vorgesehen funktioniert. Bereits bei einer Störung der Funktion der netzspannungsabhängigen Auslöseelektronik 7 steuert diese nicht mehr ordnungsgemäß die Steuerelektronik 21 in der von dieser erwarteten Form an, woraufhin die Steuerelektronik 21 die netzspannungsabhängige Auslöseelektronik 7 abschaltet bzw. von der entsprechenden Tertiärwicklung 6 des Summenstromwandlers 2 elektrisch trennt, und gleichzeitig die netzspannungsunabhängige Auslöseelektronik 5 aktiviert, indem diese mit der entsprechenden Sekundärwicklung 4 des Summenstromwandlers 2 schaltungstechnisch verbunden bzw. kontaktiert wird. Dadurch kann nicht nur sichergestellt werden, dass stets eine der beiden Auslöseelektroniken 5, 7 aktiv ist, sondern vielmehr, dass die netzspannungsabhängige Auslöseelektronik 7 nur in Betrieb ist, wenn diese auch entsprechend deren Vorgaben funktioniert.

Der gegenständliche Fehlerstromschutzschalter 1 weist einen Summenstromwandler 2 auf, welcher einen Kern aufweist, insbesondere einen Ringbandkern. Dieser Kern weist eine Öffnung auf, durch welche die Primärwicklungen 3 geführt sind. Die Bezeichnung Primärwicklung 3 schließ dabei auch ein, dass die betreffenden Leiter, die jeweils in Anschlussklemmen des Fehlerstromschutzschalters 1 münden, lediglich durch die Öffnung hindurchgeführt sind, ohne den Querschnitt des Kerns zu umfassen. Es ist vorgesehen an die betreffenden Anschlussklemmen des Fehlerstromschutzschalters 1 die Netzleiter N, L₁, L₂, L₃ anzuschließen, wobei auch zweipolige Ausführungen des gegenständlichen Fehlerstromschutzschalters 1 vorgesehen sein können.

Auf dem Summenstromwandler 2 sind weiters eine Sekundärwicklung 4 und eine Tertiärwicklung 6 angeordnet, welche dabei typischerweise um den Querschnitt des Kerns gewickelt sind.

Der gegenständliche Fehlerstromschutzschalter 1 weist eine netzspannungsunabhängige Auslöseelektronik 5 sowie eine netzspannungsabhängigen Auslöseelektronik 7 auf.

Die netzspannungsunabhängige Auslöseelektronik 5 ist schaltungstechnisch mit der Sekundärwicklung 4 verbunden bzw. kontaktiert, und kann entsprechend den bekannten Ausführungsformen entsprechender netzspannungsunabhängiger Auslöseelektroniken 5 ausgeführt sind, wobei insbesondere die Ausbildung selbiger umfassend eine Energiespeicherschaltung sowie eine dieser nachgeschaltete Komparatorschaltung vorgesehen ist.

Die netzspannungsabhängige Auslöseelektronik 7 ist bevorzugt zufolge Fig. 1 ausgebildet, und mit der Tertiärwicklung 6 schaltungstechnisch verbunden bzw. kontaktiert. Die netzspannungsabhängige Auslöseelektronik 5 weist eine digitale Signalverarbeitungseinheit 11 auf, welche bevorzugt als Mikrocomputer bzw. Mikrocontroller ausgebildet ist.

Gemäß der bevorzugten Ausführungsform ist vorgesehen, dass die netzspannungsabhängige Auslöseelektronik 7 auch zur Detektion glatter Gleichfehlerströme ausgebildet ist. Nachfolgend wird die dargestellte bevorzugte Ausführungsform der netzspannungsabhängigen Auslöseelektronik 7 beschrieben.

Die digitale Signalverarbeitungseinheit 11 steuert dabei eine Sinusstromquelle14 an, welche schaltungstechnisch mit der Tertiärwicklung 6 verbunden ist. Dadurch besteht die Möglichkeit den Kern des Summenstromwandlers 2 mit einer Erregerfrequenz f vorzumagnetisieren. Beim Auftreten eines Gleichfehlerstromes kommt es aufgrund nichtlinearer Vorgänge zum Auftreten von Signalkomponenten bei der doppelten Erregerfrequenz 2f, welche proportional der Höhe des auftretenden Gleichfehlerstromes sind.

Die Tertiärwicklung 6 ist weiters schaltungstechnisch mit einer Signalerfassungseinheit 15 verbunden, welche die auftretenden Signale der Tertiärwicklung 6 aufnimmt und gegebenenfalls aufbereitet und an die digitale Signalverarbeitungseinheit 11 weitergibt. Es kann dabei vorgesehen sein, dass die Signalerfassungseinheit 15 insbesondere auch zur Detektion der bei der doppelten Erregerfrequenz 2f auftretenden Signalkomponenten ausgebildet ist.

In der digitalen Signalverarbeitungseinheit 11 werden die eingehenden, und durch die Signalerfassungseinheit 15 bereitgestellten, Fehlerstromsignale verarbeitet und dabei mit gespeicherten Grenzwerten bzw. Auslösebedingungen verglichen.

Zudem Erzeugt die digitale Signalverarbeitungseinheit bevorzugt ein Signal zur vorgebbaren Ansteuerung der Steuerelektronik 21. Dabei ist vorgesehen, dass es sich bei dem entsprechenden Signal um ein vorgebbar änderndes Steuersignal handelt, insbesondere um ein vorgebbar und periodisch alternierendes Signal, insbesondere um ein Rechtecksignal. Es ist dabei insbesondere vorgesehen die Erzeugung des betreffenden Signals derart in die digitale Signalverarbeitungseinheit 11 zu implementieren, dass eine Störung des internen Programmablaufes in der digitale Signalverarbeitungseinheit 11 auch zu einer Störung der Erzeugung des betreffenden Signals führt.

Die digitale Signalverarbeitungseinheit 11 steuert daher bei störungsfreiem Betrieb die Steuerelektronik 21 mit dem betreffenden Signal an. Es ist dabei vorgesehen, dass die Steuerelektronik 21 bei der entsprechenden Ansteuerung durch die netzspannungsabhängige Auslöseelektronik 7 einen Schalter 8, welcher in dem Fehlerstromschutzschalter 1 zwischen Sekundärwicklung 4 bzw. Tertiärwicklung 6 und den jeweils zugehörigen Auslöseelektroniken 5, 7 angeordnet ist, ansteuert. Dabei ist weiters vorgesehen, dass der Schalter 8 im angesteuerten Zustand den Kontakt der Sekundärwicklung 4 zur netzspannungsunabhängigen Auslöseelektronik 5 unterbricht und den Kontakt der Tertiärwicklung 6 zur netzspannungsabhängigen Auslöseelektronik 7 herstellt.

Der Schalter 8 ist dabei bevorzugt als Halbleiterrelais 9 ausgebildet, wobei insbesondere vorgesehen ist, dass der Schalter als Photo-MOS-Relais 10 ausgebildet ist. Durch die Ausbildung als Halbleiterrelais 9 kann eine kurze Schaltzeit erzielt werden, sowie ein sicherer Langzeitbetrieb. Durch die bevorzugte Ausbildung desselben als Photo-MOS-Relais 10 kann zudem eine galvanische Trennung der einzelnen Schaltkreise erzielt werden, wodurch die ordnungsgemäße Funktion der unterschiedlichen Schaltkreise des Fehlerstromschutzschalters 1 vorteilhaft unterstützt wird.

Der Schalter 8 weist gemäß der bevorzugten Ausführungsform zwei Schaltstrecken auf, welche gekoppelt sind, sodass bei jeder Betätigung des Schalters 8 jeweils beide Schalstrecken geschaltet werden. Dabei ist ein erster Schaltkontakt 16, welcher in der schaltungstechnischen Verbindung zwischen der Tertiärwicklung 6 und der netzspannungsabhängigen Auslöseelektronik 7 angeordnet ist, als sog. Schließer ausgebildet, und ein zweiter Schaltkontakt 17, welcher in der schaltungstechnischen Verbindung zwischen der Sekundärwicklung 4 und der netzspannungsunabhängigen Auslöseelektronik 5 angeordnet ist, als sog. Öffner ausgebildet. Der Begriff "Schließer" bedeutet dabei, dass der betreffende Schalter 8 bei einer Ansteuerung und nur während einer solchen Ansteuerung den betreffenden Schaltkontakt 16 schließt bzw. geschlossen hält, und sofern keine entsprechende Ansteuerung erfolgt, der betreffende Schaltkontakt 16 nicht geschlossen ist, und daher keine leitende Verbindung über diesen Schaltkontakt 16 besteht. Gemäß der bevorzugten Ausführungsform ist vorgesehen, dass der Schalter durch ein zeitlich andauerndes High-Signal angesteuert wird.

Der Fehlerstromschutzschalter 1 weist weiters ein Netzteil 12 auf, zur Versorgung der netzspannungsabhängigen Komponenten.

Nachfolgend wird eine in Fig. 2 dargestellte bevorzugte Ausführungsform einer Steuerelektronik 21 beschrieben.

Wie bereits dargelegt ist die digitale Signalverarbeitungseinheit 11 bevorzugt zur Ausgabe eines sich vorgebbar ändernden Steuersignals an einen Steuereingang 23 der Steuerelektronik 21 ausgebildet. Gemäß der bevorzugten Ausführungsform, dergemäß die digitale Signalverarbeitungseinheit 11 einen Prozessor aufweist, welcher die Signalanalyse des Fehlerstromsignals durchführt, und hiezu gegebenenfalls einen Analog/Digitalwandler umfasst, ist vorgesehen, dass die digitale Signalverarbeitungseinheit 11 zusätzlich das sich vorgebbar ändernde Steuersignal erzeugt und ausgibt, wobei vorgesehen ist, dass dieses sich vorgebbar ändernde Steuersignal nur dann erzeugt wird, wenn die digitale Signalverarbeitungseinheit 11 ordnungsgemäß vorgebbar arbeitet. Dies kann durch entsprechende Programmierung des Prozessors einfach erreicht werden. Bevorzugt ist hiebei vorgesehen, dass - zusätzlich zu den anderen Arbeitsroutinen - weiters etwa ein vorgebbar periodisches Rechtecksignal als Steuersignal an den Steuereingang 23 der Steuerelektronik 21 ausgegeben wird, wie dies auch in Fig. 2 dargestellt ist. Es können aber auch andere Arten eines Steuersignals generiert und ausgegeben werden. Dadurch wird erreicht, dass bei einem Fehlerstromschutzschalter 1 mit netzspannungsabhängiger Auslöseelektronik 7 nicht nur das Vorhandensein der Versorgungsspannung oder der Bauteile überprüft wird, sondern tatsächlich die korrekte bzw. vorgegebene Funktion der für die netzspannungsabhängige Auslösung notwendigen Baugruppen. Dadurch kann sichergestellt werden, dass ein derartiger Fehlerstromschutzschalter 1 bei einer nicht funktionierenden netzspannungsabhängigen Auslöseelektronik 7 als voll netzspannungsunabhängiger Fehlerstromschutzschalter 1 weiterarbeitet. Dadurch werden auch die Normen voll erfüllt, welche netzspannungsabhängige Fehlerstromschutzschalter 1 nicht zulassen.

Für die entsprechende Funktion des Schalters 8 ist gemäß der bevorzugten Ausführungsform eine entsprechende Steuerelektronik 21 vorgesehen, welche einen Ausgang lediglich dann aktiviert, wenn an deren Steuereingang 23 das entsprechend vorgegebene Steuersignal anliegt. Grundsätzlich kann dabei jede Art einer entsprechenden Schaltungsanordnung vorgesehen sein.

Fig. 2 zeigt eine besonders bevorzugte Ausbildung einer Steuerelektronik 21 für ein periodisch rechteckförmiges Steuersignal, wobei in der Darstellung die international gängigen Schaltsymbole und Dimensionsangaben verwendet wurden.

Der Ausgang der Steuerelektronik 21 ist mit dem Eingang des Halbleiterrelais 9 verbunden, welches gemäß Fig. 2 als Photo-MOS-Relais 10 ausgebildet ist, wobei in Fig. 2 lediglich die zur Ansteuerung vorgesehenen LEDs dargestellt sind, daher nicht das vollständige Photo-MOS-Relais 10.

Der gegenständliche Fehlerstromschutzschalter weist zudem ein Auslöserelais 13 auf, welches mittels der Dioden 19, 20 mit den beiden Auslöseelektroniken 5, 7 schaltungstechnisch verbunden ist.

## Patentansprüche

1. Fehlerstromschutzschalter (1) mit einem Summenstromwandler (2), welcher Primärwicklungen (3) sowie eine Sekundärwicklung (4) und eine Tertiärwicklung (6) aufweist, wobei die Sekundärwicklung (4) mit einer netzspannungsunabhängigen Auslöseelektronik (5) schaltungstechnisch verbunden ist, wobei die Tertiärwicklung (6) mit einer netzspannungsabhängigen Auslöseelektronik (7) schaltungstechnisch verbunden ist, wobei der Fehlerstromschutzschalter (1) eine Steuerelektronik (21) aufweist, welche dazu ausgebildet ist, bei vorgebbarer Ansteuerung durch die ordnungsgemäß funktionierende netzspannungsabhängige Auslöseelektronik (7) einen Schalter (8) anzusteuern, wobei der Schalter (8) im angesteuerten Zustand den Kontakt der Sekundärwicklung (4) zur netzspannungsunabhängigen Auslöseelektronik (5) unterbricht und den Kontakt der Tertiärwicklung (6) zur netzspannungsabhängigen Auslöseelektronik (7) herstellt, und wobei anderenfalls die Steuerelektronik 21 die netzspannungsabhängige Auslöseelektronik 7 von der Tertiärwicklung 6 des Summenstromwandlers 2 elektrisch trennt, und gleichzeitig die netzspannungsunabhängige Auslöseelektronik 5 mit der Sekundärwicklung 4 des Summenstromwandlers 2 kontaktiert.

2. Fehlerstromschutzschalter (1) nach Anspruch 1, **dadurch gekennzeichnet, dass** der Schalter (8) als Halbleiterrelais (9) ausgebildet ist.

3. Fehlerstromschutzschalter (1) nach Anspruch 1 oder 2, **dadurch gekennzeichnet, dass** der Schalter (8) als Photo-MOS-Relais (10) ausgebildet ist.

4. Fehlerstromschutzschalter (1) nach Anspruch 1, **dadurch gekennzeichnet, dass** die netzspannungsabhängige Auslöseelektronik (7) eine digitale Signalverarbeitungseinheit (11) aufweist, welche zur Ausgabe eines sich vorgebbar ändernden Steuersignals an einen Steuereingang (23) der Steuerelektronik (21) ausgebildet ist, und dass die Steuerelektronik (21) dazu ausgebildet ist, bei Anliegen des sich vorgebbar ändernden Steuersignals an dem Steuereingang (23) den Schalter (8) anzusteuern.

## Claims

1. Residual current circuit breaker (1) with a summation current transformer (2), having primary windings (3) as well as a secondary winding (4) and a tertiary winding (6), wherein the secondary winding (4) is connected by circuitry with mains voltage independent tripping electronics (5), wherein the tertiary winding (6) is connected by circuitry with mains voltage-dependent tripping electronics (7), wherein the residual current circuit breaker (1) has an electronic control unit (21) which is designed to control a switch (8) for specifiable control by the properly functioning mains voltage-dependent tripping electronics (7), wherein the switch (8) in the activated state interrupts the contact of the secondary winding (4) to the mains voltage-independent tripping electronics (5) and establishes the contact of the tertiary winding (6) to the mains voltage-dependent tripping electronics (7), and wherein the control unit (21) is otherwise designed to electrically separate the main voltage-dependent tripping electronics (7) from the tertiary winding (6) of the total current converter (2) and at the same time establish the contact between the line-voltage-independent tripping electronics (5) and the secondary winding (4) of the summation current transformer (2).

2. Residual current circuit breaker (1) according to claim 1, **characterised in that** the switch (8) is designed as a semiconductor relay (9).

3. Residual current circuit breaker (1) according to claim 1 or 2, **characterised in that** the switch (8) is designed as a photoMOS relay (10).

4. Residual current circuit breaker (1) according to claim 1, **characterised in that** the mains voltage-dependent tripping electronics (7) comprises a digital signal processing unit (11) which is designed to output a specifiable changing control signal to a control input (23) of the control electronics (21), and the control electronics (21) are designed to control the switch (8) when the predefinably changing control signal is present at the control input (23).

## Revendications

1. Disjoncteur différentiel (1) avec un transformateur de courant sommateur (2), lequel présente des enroulements primaires (3) ainsi qu'un enroulement secondaire (4) et un enroulement tertiaire (6), dans lequel l'enroulement secondaire (4) est relié par un circuit à une électronique de déclenchement indépendante de la tension du réseau (5), dans lequel l'enroulement tertiaire (6) est relié par un circuit à une électronique de déclenchement dépendante de la tension du réseau (7), dans lequel le disjoncteur différentiel (1) présente une électronique de commande (21), laquelle est adaptée pour commander un interrupteur (8) lors de la commande prédéfinissable par l'électronique de déclenchement dépendante de la tension du réseau (7) fonctionnant correctement, dans lequel l'interrupteur (8) à l'état activé coupe le contact de l'enroulement secondaire (4) avec l'électronique de déclenchement indépendante de la tension du réseau (5) et établit le contact de l'enroulement tertiaire (6) avec l'électronique de déclenchement dépendante de la tension du réseau (7), et dans lequel sinon l'électronique de commande (21) sépare électriquement l'électronique de déclenchement dépendante de la tension du réseau (7) de l'enroulement tertiaire (6) du transformateur de courant sommateur (2), et met en contact en même temps l'électronique de déclenchement indépendante de la tension du réseau (5) avec l'enroulement secondaire (4) du transformateur de courant sommateur (2).

2. Disjoncteur différentiel (1) selon la revendication 1, **caractérisé en ce que** l'interrupteur (8) est réalisé en tant que relais à semi-conducteur (9).

3. Disjoncteur différentiel (1) selon la revendication 1 ou 2, **caractérisé en ce que** l'interrupteur (8) est réalisé en tant que relais photo-MOS (10).

4. Disjoncteur différentiel (1) selon la revendication 1, **caractérisé en ce que** l'électronique de déclenchement dépendante de la tension du réseau (7) présente une unité de traitement de signal numérique (11), laquelle est réalisée pour l'émission d'un signal de commande changeant de manière prédéfinissable au niveau d'une entrée de commande (23) de l'électronique de commande (21), et **en ce que** l'électronique de commande (21) est réalisée pour commander l'interrupteur (8) lors de l'application du signal de commande changeant de manière prédéfinissable au niveau de l'entrée de commande (23).
